# EUROPÄISCHE PATENTSCHRIFT

(11) **EP 2 454 462 B1**
(45) Veröffentlichungstag und Bekanntmachung des Hinweises auf die Patenterteilung: **17.04.2013**
(21) Anmeldenummer: 10727680.0
(22) Anmeldetag: 18.06.2010
(51) Int. Cl.: F02D 19/06, F02D 19/08, F02D 41/30, F02D 41/06, F02N 19/00

(54) **VERFAHREN ZUM BETREIBEN EINER BRENNKRAFTMASCHINE FÜR GASFÖRMIGEN UND FLÜSSIGEN KRAFTSTOFF UND BRENNKRAFTMASCHINE**
METHOD FOR OPERATING AN INTERNAL COMBUSTION ENGINE FOR GASEOUS AND LIQUID FUEL AND INTERNAL COMBUSTION MACHINE
PROCÉDÉ PERMETTANT DE FAIRE FONCTIONNER UN MOTEUR À COMBUSTION INTERNE POUR CARBURANT GAZEUX ET CARBURANT LIQUIDE, ET MOTEUR À COMBUSTION INTERNE CORRESPONDANT

(30) Priorität: 16.07.2009 DE 102009033861
(43) Veröffentlichungstag der Anmeldung: 23.05.2012
(73) Patentinhaber: Daimler AG, 70327 Stuttgart (DE)
(72) Erfinder: WUNDERLICH, Klaus, 71336 Waiblingen (DE)
(74) Vertreter: JENSEN & SON
(86) Internationale Anmeldenummer: PCT/EP2010/003689
(87) Internationale Veröffentlichungsnummer: WO 2011/006572

(56) Entgegenhaltungen:
- DE-A1- 19 922 748
- FR-A1- 2 441 732
- US-A- 3 659 574
- US-A- 6 073 592

## Beschreibung

Die Erfindung betrifft ein Verfahren zum Betreiben einer Brennkraftmaschine für gasförmigen und flüssigen Kraftstoff, bei welchem der gasförmige Kraftstoff stromaufwärts einer Brennkammer der Brennkraftmaschine in einen Ansaugtrakt eingebracht wird. Beim Betreiben der Brennkraftmaschine mit dem flüssigen Kraftstoff wird der flüssige Kraftstoff in die Brennkammer direkt eingespritzt.

Die Patentanmeldung FR 2 441 732 A offenbart ein Verfahren zum Betreiben einer Brennkraftmaschine für gasförmigen und flüssigen Kraftstoff, bei welchem der gasförmige Kraftstoff stromaufwärts einer Brennkammer der Brennkraftmaschine in einen Ansaugtrakt eingebracht wird und der flüssige Kraftstoff in die Brennkammer direkt eingespritzt wird. Die Brennkraftmaschine wird in einem Start-Stopp-Betrieb betrieben, wobei auf einen Stopp der Brennkraftmaschine folgenden Start in die Brennkammer wenigstens eines Zylinders der flüssige Kraftstoff eingespritzt wird.

Die Offenlegungsschrift DE 199 22 748 A1 offenbart ein Verfahren zum Betreiben einer Brennkraftmaschine für gasförmigen und flüssigen Kraftstoff, bei welchem der gasförmige Kraftstoff stromaufwärts einer Brennkammer der Brennkraftmaschine in einen Ansaugtrakt eingebracht wird und der flüssige Kraftstoff in die Brennkammer direkt eingespritzt wird und die Brennkraftmaschine in einem Start-Stopp-Betrieb betrieben wird.

Die DE 10 2006 049 242 A1 betrifft eine mit Gas und Benzin betreibbare Brennkraftmaschine. Hierbei ist an einem Saugrohr der Brennkraftmaschine je Zylinder mindestens ein Gasinjektor angeordnet, mittels welchem Erdgas in das Saugrohr eingeblasen werden kann. Des Weiteren weist jeder Zylinder der Brennkraftmaschine einen Benzininjektor auf, mittels welchem Benzin direkt in die Brennkammer eingespritzt werden kann. Durch das Betreiben der Brennkraftmaschine mit Erdgas ist ein vergleichsweise geringer Schadstoffausstoß erreichbar.

Aufgabe der vorliegenden Erfindung ist es, ein verbessertes Verfahren der eingangs genannten Art und eine verbesserte Brennkraftmaschine für gasförmigen und flüssigen Kraftstoff zu schaffen.

Diese Aufgabe wird durch ein Verfahren mit den Merkmalen des Patentanspruchs 1 gelöst. Vorteilhafte Ausgestaltungen mit zweckmäßigen Weiterbildungen der Erfindung sind in den jeweils abhängigen Patentansprüchen angegeben.

Bei dem erfindungsgemäßen Verfahren zum Betreiben einer Brennkraftmaschine für gasförmigen und flüssigen Kraftstoff, bei welchem der gasförmige Kraftstoff stromaufwärts einer Brennkammer der Brennkraftmaschine in einen Ansaugtrakt eingebracht wird, und bei welchem der flüssige Kraftstoff in die Brennkammer direkt eingespritzt wird, wird die Brennkraftmaschine in einem Start-Stopp-Betrieb betrieben. Der Start-Stopp-Betrieb führt zu einer Reduzierung des Kraftstoffverbrauchs der Brennkraftmaschine und somit zu einem besonders geringen Schadstoffausstoß, insbesondere zu einem verringerten Ausstoß an Kohlendioxid. Im Start-Stopp-Betrieb wird die Brennkraftmaschine ausgeschaltet, wenn deren Antriebsleistung nicht benötigt wird. Dadurch ist ein verbessertes Verfahren zum Betreiben einer Brennkraftmaschine für gasförmigen und flüssigen Kraftstoff bereitgestellt. Bei dem flüssigen Kraftstoff kann es sich insbesondere um flüssigen Ottokraftstoff handeln.

Es wird im Start-Stopp-Betrieb bei einem auf einen Stopp der Brennkraftmaschine folgenden Start in die Brennkammer wenigstens eines Zylinders der flüssige Kraftstoff eingespritzt. Dem liegt die Erkenntnis zugrunde, dass das indirekte Einbringen von gasförmigem Kraftstoff in die Brennkammer im Start-Stopp-Betrieb mit einem verringerten Startkomfort verbunden ist. Dies liegt daran, dass es beim Einbringen von gasförmigem Kraftstoff in den Ansaugtrakt bei dem auf einen Stopp der Brennkraftmaschine folgenden Start bis zum Zünden zunächst mindestens eines Ansaugtakts bedarf, um das Luft-Gas-Gemisch in die Brennkammer zu befördern.

Demgegenüber kann bei einer flüssigen Kraftstoff direkt einspritzenden Brennkraftmaschine in die bereits mit Luft gefüllte Brennkammer eingespritzt werden. Der Kolben des Zylinders befindet sich im Anschluss an den Abstellvorgang oder Stopp der Brennkraftmaschine bevorzugt im Bereich des unteren Totpunkts. Beim Anlassen muss dann bis zur ersten Zündung des Zylinders, in welchen der flüssige Kraftstoff eingespritzt wurde, lediglich ein Verdichtungshub erfolgen. Dadurch ist bei der Brennkraftmaschine für gasförmigen und flüssigen Kraftstoff ein besonders rasches und besonders effizientes Anlassen bei dem auf den Stopp der Brennkraftmaschine folgenden Start ermöglicht.

Es ist somit eine schnelle Startbarkeit der Brennkraftmaschine erreicht, wie sie für eine flüssigen Kraftstoff, insbesondere flüssigen Ottokraftstoff, direkt einspritzende Brennkraftmaschine gegeben ist. Des Weiteren wird der sich in dem Injektor befindende flüssige Kraftstoff regelmäßig, nämlich beim auf den Stopp der Brennkraftmaschine folgenden Start, ausgetauscht, auch wenn die Brennkraftmaschine grundsätzlich mit gasförmigem Kraftstoff, beispielsweise hoch verdichtetem Erdgas (CNG = Compressed Natural Gas), betrieben wird. Dies ermöglicht des Weiteren eine regelmäßige Funktionskontrolle und Diagnose des Direkteinspritzsystems für den flüssigen Kraftstoff.

Insbesondere hat es sich als vorteilhaft gezeigt, wenn gemäß der Erfindung im Start-Stopp-Betrieb bei einem auf einen Stopp der Brennkraftmaschine folgenden Start in einem auf ein einmaliges Einspritzen von flüssigem Kraftstoff in die Brennkammer wenigstens eines Zylinders folgenden Ansaugtakt gasförmiger Kraftstoff in den Ansaugtrakt des Zylinders eingebracht wird. Es wird also bevorzugt lediglich einmal flüssiger Kraftstoff eingespritzt und dann der entsprechende Zylinder nach dem Starten wieder mit gasförmigem Kraftstoff betrieben. Da im Start-Stopp-Betrieb beim auf den Stopp folgenden Start die Brennkraftmaschine bereits betriebswarm ist, ist beim Einspritzen von flüssigem Kraftstoff kein Ausbilden eines Wandfilms zu erwarten, so dass das Einspritzen von flüssigem Kraftstoff mit guten Emissionswerten einhergeht.

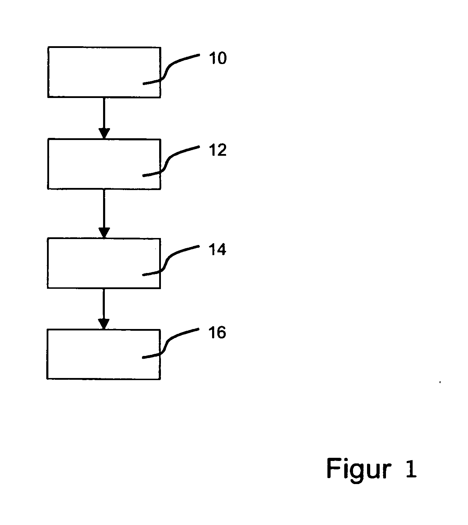

Die vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnung.

Diese zeigt beispielhaft ein Ablaufdiagramm für den Betrieb einer Brennkraftmaschine für gasförmigen und flüssigen Kraftstoff.

Eine (nicht gezeigte) Brennkraftmaschine für ein Fahrzeug ist mit gasförmigem und flüssigem Kraftstoff betreibbar, beispielsweise mit hoch verdichtetem Erdgas (CNG = Compressed Natural Gas) und mit Benzin. Zum Einbringen des Gases in einen Ansaugtrakt weist die Brennkraftmaschine einen Gasinjektor auf. Des Weiteren ist ein Benzininjektor vorgesehen, mittels welchem Benzin direkt in die Brennkammer eines jeweiligen Zylinders eingespritzt wird. Die Brennkraftmaschine umfasst eine Steuereinrichtung für einen Start-Stopp-Betrieb.

In dem Start-Stopp-Betrieb erfolgt im Anschluss an einen Stopp 10, etwa an einer Ampel oder einer Bahnschranke, ein Einspritzen 12 von Benzin in die Brennkammer wenigstens eines Zylinders der Brennkraftmaschine. Hierbei ist die Brennkammer mit Luft gefüllt. Aufgrund des vorangegangenen Stopps 10 befindet sich der Kolben des Zylinders im Bereich des unteren Totpunkts vor dem Verdichtungstakt. Der Anlasser bewirkt einen Verdichtungshub des Zylinders und es erfolgt ein Zünden 14 des Benzin-Luft-Gemisches in der Brennkammer.

Im Anschluss an das mit Benzineinspritzung durchgeführte Starten erfolgt ein Umschalten 16 des Zylinders auf den Betrieb mit Gas. Es wird also beim Hochlaufen oder nach dem Hochlaufen der Brennkraftmaschine in den Gasbetrieb umgeschaltet.

Das Umschalten 16 von Benzin nach Gas kann bereits erfolgen, wenn lediglich in einen Zylinder der mehrere Zylinder aufweisenden Brennkraftmaschine einmal Benzin eingespritzt wurde.

Alternativ kann ein, insbesondere lediglich einmaliges, Einspritzen 12 in eine Mehrzahl von Zylindern, insbesondere in alle Zylinder, vorgesehen sein bevor das Umschalten 16 von dem Benzinbetrieb auf den Gasbetrieb erfolgt.

Es kann jedoch auch je Zylinder ein mehr als einmaliges Einspritzen 12 vorgesehen sein. Dann erfolgt das Umschalten 16 erst, nachdem in den betreffenden Zylinder während mehr als eines Arbeitsspiels Benzin eingespritzt wurde.

Des Weiteren kann das Umschalten 16 kontinuierlich erfolgen, so dass in einen Zylinder zunehmend weniger Benzin direkt eingespritzt und gleichzeitig zunehmend mehr Gas in den Ansaugtrakt eingebracht wird, die Betriebsstoffumschaltung also in Rampen ein- und ausgeblendet wird.

Das Umschalten 16 von Benzin zu Gas als Brennstoff kann in Abhängigkeit von einer Temperatur der Brennkraftmaschine vorgenommen werden, wenn also die hochgelaufene Brennkraftmaschine eine Mindesttemperatur erreicht hat.

Ebenso kann vorgesehen sein, auch beim auf den Stopp 10 folgenden Starten kein Benzin einzuspritzen, und stattdessen Gas in den Ansaugtrakt einzubringen, wenn die Brennkraftmaschine noch kalt ist und so bei Verwendung von Benzin als Brennstoff ein Ausbilden eines unerwünschten Wandfilms zu besorgen wäre oder kein flüssiger Kraftstoff zur Verfügung steht.

## Patentansprüche

1. Verfahren zum Betreiben einer Brennkraftmaschine für gasförmigen und flüssigen Kraftstoff, bei welchem der gasförmige Kraftstoff stromaufwärts einer Brennkammer der Brennkraftmaschine in einen Ansaugtrakt eingebracht wird, und bei welchem der flüssige Kraftstoff in die Brennkammer direkt eingespritzt wird und die Brennkraftmaschine in einem Start-Stopp-Betrieb betrieben wird,
**dadurch gekennzeichnet, dass**
im Start-Stopp-Betrieb bei einem auf einen Stopp (12) der Brennkraftmaschine folgenden Start in einem auf ein, insbesondere einmaliges, Einspritzen des flüssigen Kraftstoffs in die Brennkammer wenigstens eines Zylinders folgenden Ansaugtakt der gasförmige Kraftstoff in den Ansaugtrakt des Zylinders eingebracht wird.

2. Verfahren nach Anspruch 1,
**dadurch gekennzeichnet, dass**
im Start-Stopp-Betrieb bei einem auf einen Stopp (12) der Brennkraftmaschine folgenden Start der gasförmige Kraftstoff in den Ansaugtrakt des Zylinders eingebracht wird, nachdem in eine Mehrzahl von Zylindern, insbesondere in alle Zylinder, der Brennkraftmaschine jeweils einmal der flüssige Kraftstoff in die jeweilige Brennkammer eingespritzt wurde.

3. Verfahren nach Anspruch 1 oder 2,
**dadurch gekennzeichnet, dass**
im Start-Stopp-Betrieb bei einem auf einen Stopp (12) der Brennkraftmaschine folgenden Start zunehmend weniger flüssiger Kraftstoff eingespritzt und zunehmend mehr gasförmiger Kraftstoff in den Ansaugtrakt eingebracht wird.

4. Verfahren nach einem der Ansprüche 1 bis 3,
**dadurch gekennzeichnet, dass**
im Start-Stopp-Betrieb bei einem auf einen Stopp (12) der Brennkraftmaschine folgenden Start ein Umschalten (16) von flüssigem Kraftstoff zu gasförmigen Kraftstoff oder von gasförmigem Kraftstoff zu flüssigem Kraftstoff als Brennstoff in Abhängigkeit von einer Temperatur der Brennkraftmaschine vorgenommen wird.

## Claims

1. Method for operating an internal combustion engine for gaseous and liquid fuel, wherein the gaseous fuel is introduced into an intake train upstream of a combustion chamber of the internal combustion engine and wherein the liquid fuel is directly injected into the combustion chamber and the internal combustion engine is operated in a start/stop mode,
**characterised in that**
in the start/stop mode, if a start follows a stop (12) of the internal combustion engine, the gaseous fuel is introduced into the intake train of the cylinder in an intake stroke following an in particular single injection of the liquid fuel into the combustion chamber of at least one cylinder.

2. Method according to claim 1,
**characterised in that**
in the start/stop mode, if a start follows a stop (12) of the internal combustion engine, the gaseous fuel is introduced into the intake train of the cylinder after the liquid fuel has been injected once each into the respective combustion chamber of a majority of the cylinders, in particular of all cylinders, of the internal combustion engine.

3. Method according to claim 1 or 2,
**characterised in that**
in the start/stop mode, if a start follows a stop (12) of the internal combustion engine, increasingly less liquid fuel is injected and increasingly more gaseous fuel is introduced onto the intake train.

4. Method according to any of claims 1 to 3,
**characterised in that**
in the start/stop mode, if a start follows a stop (12) of the internal combustion engine, a changeover (16) from liquid fuel to gaseous fuel and from gaseous fuel to liquid fuel is carried out as a function of a temperature of the internal combustion engine.

## Revendications

1. Procédé permettant de faire fonctionner un moteur à combustion interne pour carburant gazeux et carburant liquide, procédé selon lequel le carburant gazeux est introduit dans une conduite d'aspiration en amont d'une chambre de combustion du moteur à combustion interne, et selon lequel le carburant liquide est injecté directement dans la chambre de combustion et le moteur à combustion interne fonctionne en mode d'arrêt et de redémarrage, **caractérisé en ce qu'**en mode d'arrêt et de redémarrage, pour un démarrage succédant à un arrêt (12) du moteur à combustion interne, dans une course d'admission succédant à une injection de préférence unique de carburant liquide dans la chambre de combustion d'au moins un cylindre, du carburant gazeux est introduit dans le conduit d'aspiration du cylindre.

2. Procédé selon la revendication 1, **caractérisé en ce qu'**en mode d'arrêt et de redémarrage, pour un démarrage succédant à un arrêt (12) du moteur à combustion interne, le carburant gazeux est introduit dans le conduit d'aspiration du cylindre après que dans une pluralité de cylindres, en particulier dans tous les cylindres, du moteur à combustion interne, le carburant liquide a été injecté une fois dans la chambre de combustion respective.

3. Procédé selon la revendication 1 ou 2, **caractérisé en ce qu'**en mode d'arrêt et de redémarrage, pour un démarrage succédant à un arrêt (12) du moteur à combustion interne, une quantité de plus en plus faible de carburant liquide est injecté et une quantité de plus en plus importante de carburant gazeux est introduite dans le conduit d'aspiration.

4. Procédé selon l'une quelconque des revendications 1 à 3, **caractérisé en ce qu'**en mode d'arrêt et de redémarrage, pour un démarrage succédant à un arrêt (12) du moteur à combustion interne, une commutation (16) du carburant liquide en carburant gazeux ou du carburant gazeux en carburant liquide est effectuée en tant que combustible en fonction d'une température du moteur à combustion interne.
